# FASCICULE DE BREVET EUROPEEN

(11) **EP 4 578 696 B1**
(45) Date de publication et mention de la délivrance du brevet: **29.07.2026**
(21) Numéro de dépôt: 24219705.1
(22) Date de dépôt: 13.12.2024
(51) Int. Cl.: B60K 35/22, B60K 37/20, B60R 11/00, B60R 11/02

(54) **AGENCEMENT D'UNE PLANCHE DE BORD D'UN VÉHICULE AUTOMOBILE ET D'UN ÉCRAN NUMÉRIQUE**
ANORDNUNG EINES ARMATURENBRETTS EINES KRAFTFAHRZEUGS UND EINES DIGITALEN BILDSCHIRMS
ARRANGEMENT OF A DASHBOARD OF A MOTOR VEHICLE AND A DIGITAL SCREEN

(30) Priorité: 26.12.2023 FR 2315279
(43) Date de publication de la demande: 02.07.2025
(73) Titulaire: Renault s.a.s, 92100 Boulogne Billancourt (FR)
(72) Inventeur: BRAUD, Morgane, 78280 GUYANCOURT (FR); CHAPUIS, Claude-Emman, 78280 GUYANCOURT (FR); DAGOREAU, Alain, 78280 GUYANCOURT (FR)

(56) Documents cités:
- EP-A1- 3 045 340
- DE-A1- 102016 200 902
- DE-A1- 102019 204 697

## Description

La présente invention se rapporte à un agencement d'une planche de bord d'un véhicule automobile et d'un écran numérique.

Dans le domaine des véhicules automobiles, la planche de bord est installée fixée à une traverse structurelle, transversalement dans l'habitacle et en s'étendant à l'arrière du côté intérieur du pare-brise jusqu'à l'avant des places du conducteur et du passager avant. La planche de bord peut être notamment réceptrice, latéralement du côté conducteur, d'un écran numérique affichant les informations relatives aux indicateurs de conduite, en partie centrale, d'un écran numérique permettant par exemple d'afficher le contrôle de divers paramètres du véhicule, de la climatisation, d'aide à la navigation, et latéralement du côté passager, d'un ou deux écrans numériques supplémentaires. Ces écrans peuvent être tactiles.

La surface de la partie de planche de bord la plus proche du côté intérieur du pare-brise, dénommée le plastron ou la coiffe, doit être dégagée de tout élément potentiellement dangereux, pour des raisons de sécurité, notamment en cas de choc dit « choc tête piéton ». En effet, la tête d'un piéton heurté par la partie avant d'un véhicule peut enfoncer localement le pare-brise et ainsi pourrait alors venir taper sur un tel élément dangereux.

Toutefois, il existe une demande de configurations de l'habitacle pour lesquelles les écrans numériques sont disposés plus à l'avant de la planche de bord, donc rapprochés du pare-brise. Ces écrans représenteraient alors un risque en cas de choc tête piéton.

DE 10 2016 200 902 A1 divulgue un agencement d'une planche de bord d'un véhicule automobile et d'un écran numérique.

L'invention vise à fournir un aménagement d'une planche de bord et d'un écran numérique, et répondant au besoin de sécurité d'un piéton contre un choc dit « choc tête piéton ».

A cet effet, l'invention fournit un agencement d'une planche de bord d'un véhicule automobile et d'un écran numérique comportant une face d'affichage et un dos opposés, un bord supérieur et un bord inférieur opposés.

Ledit agencement comprend :
- au moins un premier élément de guidage de l'écran solidarisé au dos de l'écran,
- au moins une patte de fixation comportant une partie supérieure sensiblement verticale, ayant une hauteur prédéterminée, solidarisée au bord inférieur de l'écran, et une partie inférieure de fixation réceptrice d'un élément de fixation,
- une paroi structurelle de la planche de bord supportant l'écran et comportant au moins un deuxième élément de guidage dudit premier élément de guidage et au moins une zone frangible réceptrice de la partie inférieure de fixation de ladite patte de fixation de l'écran.

Ledit deuxième élément de guidage s'étend sensiblement incliné par rapport à la verticale et à proximité du dos de l'écran, et il comporte une partie de parcours inférieure disponible sur une distance prédéterminée. En outre, ledit deuxième élément de guidage est prolongé inférieurement par une partie de paroi structurelle sensiblement verticale prolongée inférieurement par une partie de paroi structurelle horizontale espacée du bord inférieur de l'écran suivant au moins la partie supérieure sensiblement verticale de la patte de fixation.

Un espace de sécurité est défini entre lesdites parties de paroi verticale et horizontale et à l'arrière de la partie de patte de fixation supérieure, pour y recevoir au moins la partie inférieure de l'écran quand l'au moins une zone frangible est rompue lors d'un choc touchant l'écran, ledit écran étant guidé en descente au moins vers ledit espace sécurisé par lesdits premier et deuxième moyens de guidage suivant la partie de parcours inférieure disponible du deuxième moyen de guidage.

On entend par zone « frangible », dite aussi parfois « fusible », que la zone est apte à se rompre sous efforts, par exemple en se cassant ou en se déchirant sous efforts.

Les termes « avant » et « arrière » font référence à l'avant et à l'arrière du véhicule automobile.

En cas de choc tête piéton, le choc répercuté sur le haut de l'écran entraîne un appui violent jusqu'à la rupture de l'au moins une patte de fixation sur la zone frangible dans laquelle la patte est fixée. Simultanément les éléments de guidage vont entrainer la descente de l'écran au moins suivant la partie de parcours inférieure disponible du deuxième moyen de guidage, jusqu'au moins dans l'espace de sécurité, voire plus bas. L'agencement permet ainsi d'installer des écrans numériques rapprochés du pare-brise, par rapport à l'art antérieur, tout en respectant des conditions de sécurité notamment en cas de « choc tête piéton ». De préférence, la partie de parcours inférieure disponible sur une distance prédéterminée (J) du deuxième élément de guidage est telle que cette distance prédéterminée (J) est sensiblement égale à la hauteur (H) de la partie supérieure sensiblement verticale de la patte de fixation.

Avantageusement, ledit au moins un premier élément de guidage de l'écran solidarisé au dos de l'écran est un rouleau de guidage, et ledit au moins un deuxième élément de guidage dudit premier élément de guidage est une rainure de guidage réceptrice du rouleau. Ces moyens de guidage facilitent aussi la mise en place de l'écran, comme expliqué plus loin en description d'un exemple et des figures annexées.

De préférence, la partie de paroi structurelle horizontale espacée du bord inférieur de l'écran comprend une partie saillante orientée vers l'arrière qui est incluse dans l'au moins zone frangible, et ladite patte de fixation comprend une partie sensiblement horizontale, entre les parties inférieure et supérieure de ladite patte, en appui sur ladite partie saillante.

Selon un mode de réalisation préféré, l'au moins zone frangible comprend des portions de paroi structurelle affaiblies, d'épaisseur amincie et/ou dépourvues de matière, entourant la partie de paroi structurelle réceptrice de la partie inférieure de fixation de la patte de fixation. De préférence encore, la partie de paroi structurelle réceptrice de la partie inférieure de fixation de la patte de fixation entourée par lesdites portions de paroi affaiblies est en saillie orientée vers l'arrière. La zone frangible peut ainsi se rompre sur tout son pourtour dans ses portions affaiblies, et par ailleurs cette partie de paroi structurelle pour la fixation est facile d'accès par un opérateur.

Avantageusement, ledit agencement comprend un couvre-écran s'étendant au-dessus d'au moins une partie de la paroi structurelle à l'avant de l'écran, et venant en débord de la face d'affichage de l'écran. De préférence ledit couvre-écran est maintenu à force à la paroi structurelle. Selon un cas particulier, ledit couvre-écran est maintenu à force en partie supérieure latérale de l'au moins une rainure de guidage.

Ce couvre-écran masque esthétiquement la partie qui serait ouverte à l'avant de l'écran tout en le protégeant, en particulier le dos de l'écran de la chaleur à l'arrière du pare-brise. En outre, il apporte une première protection à la tête d'un piéton qui serait heurté par le véhicule comportant un écran rapproché du pare-brise.

Avantageusement, lesdits premier et deuxième éléments de guidage maintiennent le corps de l'écran à la paroi structurelle. En effet, notamment si l'écran est de grande taille, les pattes de fixation solidarisées au bord inférieur de l'écran pourraient nécessiter un maintien complémentaire en hauteur pour consolider la retenue en hauteur de l'écran à la paroi structurelle. En particulier, le premier élément de guidage solidarisé à l'écran est solidarisé environ à mi-hauteur de l'écran.

L'invention a également pour objet un véhicule comportant une planche de bord supportant au moins un écran numérique, et comprenant au moins un agencement de la planche de bord et de l'écran numérique tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique générale, en perspective, d'un agencement d'une planche de bord et d'un écran numérique selon un mode de réalisation de l'invention.
[Fig. 2] est une vue en coupe longitudinale A-A de l'agencement entre l'écran et la planche de bord de la figure 1.
[Fig. 3] est une vue de détails, en perspective et de dessus d'une partie de l'agencement représenté aux figures précédentes.

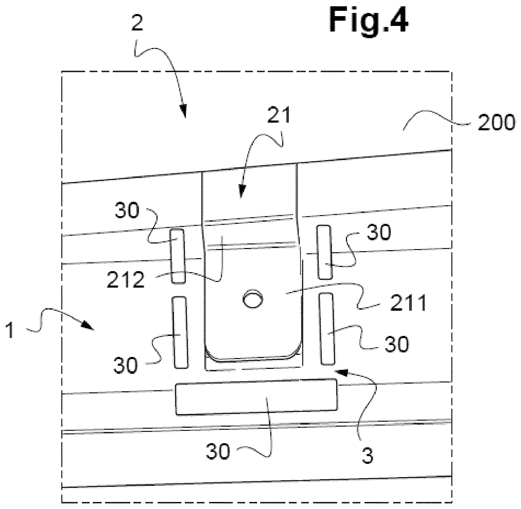

[Fig. 4] est une vue de détails, en perspective et de dessus d'une autre partie de l'agencement représenté aux figures 1 et 2.
[Fig. 5] est une vue en perspective d'un repère orthonormé classique XYZ d'un véhicule automobile.

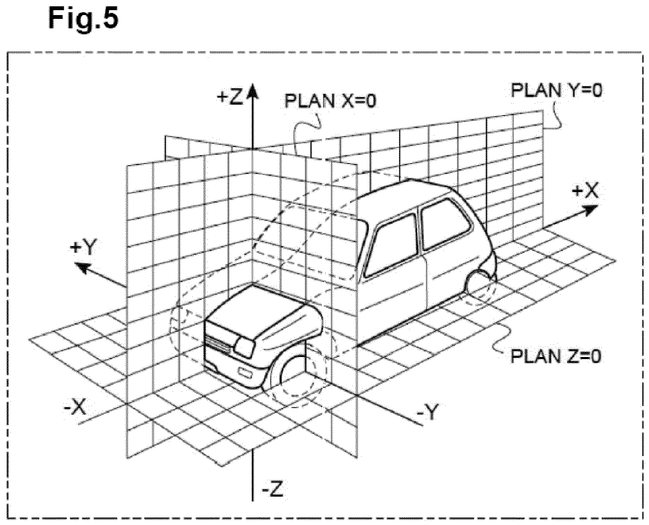

Les orientations exprimées dans la description des figures sont données en référence à un repère orthonormé XYZ d'un véhicule automobile selon la figure 5, dans lequel X représente la direction longitudinale, orientée de l'avant vers l'arrière du véhicule, Y la direction transversale orientée vers la droite du véhicule, et Z la direction verticale orientée vers le haut du véhicule en position usuelle, reposant sur ses roues.

Les orientations de l'agencement décrit font donc référence à ces orientations, les termes « avant » et « arrière » étant aussi indiqués en référence à l'avant et à l'arrière du véhicule automobile.

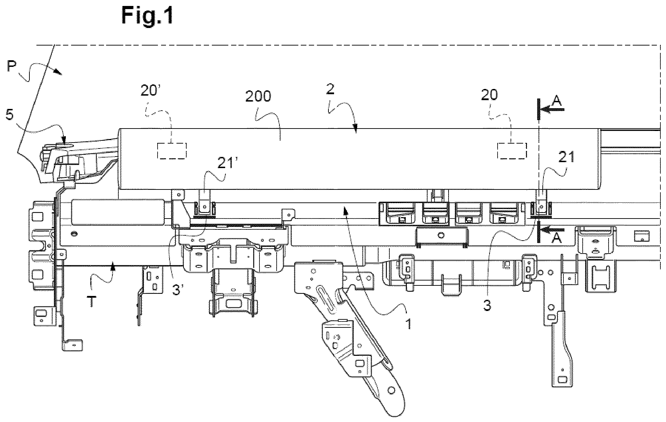

La figure 1 représente un agencement d'une planche de bord d'un véhicule automobile comprenant une paroi structurelle 1 et d'un écran numérique 2 selon l'invention, situé à l'avant de la planche de bord, à proximité du pare-brise P, le plastron 5 de la planche de bord étant situé entre ledit arrangement et le pare-brise.

La paroi structurelle 1 de la planche de bord est transversale et fixée à la traverse de planche de bord T. Elle supporte l'écran 2 qui lui est fixé par deux pattes de fixation 21, 21' dans des zones frangibles 3, 3'.

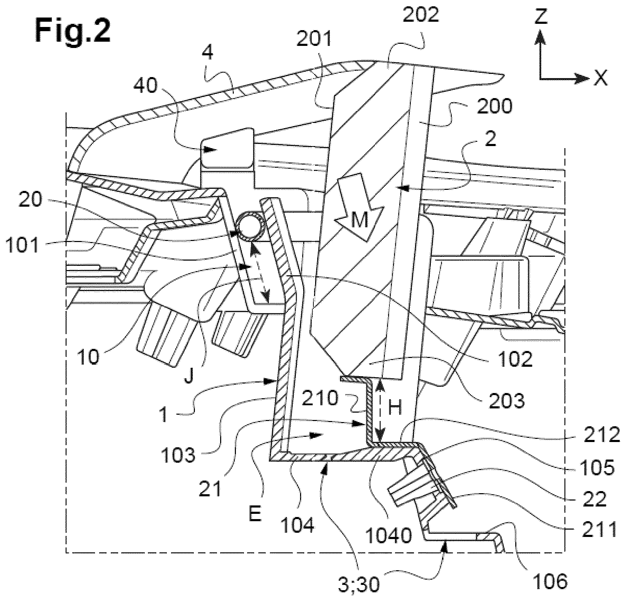

La figure 2 représente l'agencement en coupe longitudinale dans le plan XZ, au niveau d'une patte de fixation 21 selon l'axe AA mentionné en Fig. 1.

L'écran numérique 2 comporte une face d'affichage 200 et un dos 201 opposés, un bord supérieur 202 et un bord inférieur 203 opposés (Fig. 2), la face d'affichage 200 étant tournée vers les sièges avant de l'habitacle (non représentés).

Deux rouleaux de guidage 20, 20' de l'écran, solidarisés au dos 201 de l'écran, sont indiqués en pointillés sur la figure 1.

L'un des rouleaux 20 est visible sur la figure 2 en coupe, fixé au dos 201 de l'écran 2. La paroi structurelle 1 de la planche de bord, supportant l'écran 2, comprend une rainure de guidage 10 réceptrice dudit rouleau 20.

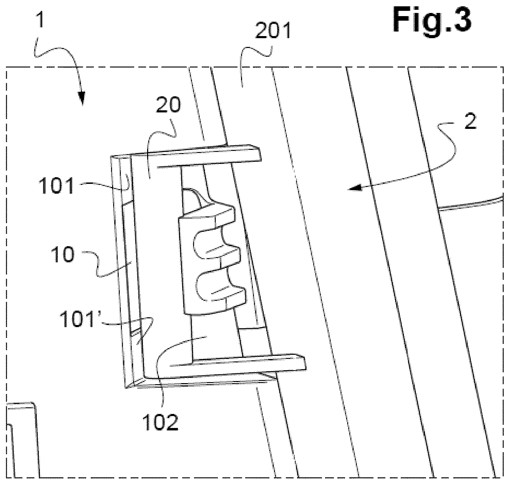

En référence à la Fig. 3 de détails, cette rainure de guidage 10 s'étend à proximité du dos 201 de l'écran et a une direction inclinée par rapport à la verticale. La rainure 10 est délimitée par une paroi arrière 102 un peu inclinée par rapport à la verticale, proximale du dos 201 de l'écran, et par deux parois avant 101, 101' espacées dans le sens transversal (Y) l'une de l'autre et qui ont chacune une orientation parallèle à la paroi de rainure arrière 102.

La paroi structurelle se prolonge en la partie inférieure de la rainure 10 par une partie de paroi structurelle sensiblement verticale 103, cette dernière étant prolongée par une partie de paroi structurelle sensiblement horizontale 104 s'étendant plus bas que le bord inférieur 203 de l'écran 2.

La zone frangible 3 de ladite paroi structurelle est située en partie inférieure de ladite paroi structurelle, plus bas que le bord inférieur 203 de l'écran 2. Elle comprend des ouvertures traversantes 30 affaiblissant, par le manque de matière, cette zone 3 de la paroi structurelle. Lesdites ouvertures 30 sont réparties suivant une forme rectangulaire occupant la partie inférieure de la paroi structurelle incluant la partie de paroi structurelle horizontale 104 ainsi qu'une partie de paroi de fixation 105, inclinée et en saillie vers l'arrière, la rendant accessible à un opérateur, et à laquelle est fixée la patte de fixation 21 de l'écran. La zone frangible 3 couvre aussi une partie de paroi structurelle 106 de section sensiblement en V dans le prolongement inférieur de la partie de paroi de fixation 105.

La patte de fixation 21 comprend une partie supérieure verticale 210 dont l'extrémité supérieure est solidarisée au bord inférieur 203 de l'écran 2. Elle comprend en outre une partie inférieure de fixation 211 fixée dans la zone frangible 3 de ladite paroi structurelle 1. Ladite patte 21 comprend une partie centrale horizontale 212 qui est située entre sa partie supérieure verticale 210 et sa partie inférieure de fixation 211 et qui repose sur la portion 1040 saillante vers l'arrière de la partie de paroi structurelle horizontale 104, à l'intérieur de la zone frangible 3, c'est-à-dire dans la zone intérieure délimitée par des ouvertures traversantes 30 d'affaiblissement.

La partie supérieure verticale 210 de la patte de fixation a une hauteur H. La partie supérieure verticale 210 de la patte maintient ainsi le bas de l'écran éloignée de la partie de paroi structurelle sensiblement horizontale104.

Ladite rainure de guidage 10 comprend une partie de parcours inférieure disponible sur une distance J, dit aussi « jeu de parcours inférieur » laissant une partie à parcourir par le rouleau 20, cette distance J étant égale à la hauteur H de la patte. L'aménagement de la paroi structurelle décrit et de l'autre rouleau 20' et de l'autre patte de fixation 21' de l'écran est similaire à celui qui vient d'être décrit.

Cette fixation de l'écran par les pattes de fixation 21, 21' et la configuration de la paroi structurelle, notamment de ses parties sensiblement verticales (103 pour la patte 21) et de ses parties sensiblement horizontales (104 pour la patte 21) s'étendant plus bas que le bord inférieur 203 de l'écran 2, créent un espace de sécurité E sous la partie inférieure de l'écran.

Par ailleurs, le bord supérieur 202 de l'écran est recouvert d'un couvre-écran 4 qui s'étend au-dessus d'une partie de la paroi structurelle à l'avant de l'écran, et qui vient en débord de la face d'affichage 200 de l'écran. Ce couvre-écran 4 est maintenu à force par un clip 40 à l'extrémité latérale supérieure desdites rainures de guidage (respectives des deux rouleaux 20, 20'). Le couvre écran a une forme plane dans un plan incliné montant de son bord avant proximal du pare-brise vers l'écran.

La fonction principale du couvre-écran 4 est de cacher les zones techniques. En complément, le couvre-écran 4 est adapté à limiter les blessures en cas de choc piéton.

En effet, en cas d'accident avec un piéton, le choc sur le couvre-écran 4 de l'écran 2 est répercuté sur le haut de l'écran, et de ce fait les pattes de fixation 21, 21' vont appuyer sur les zones frangibles 3 dans lesquelles elles ont fixées et entraîner la rupture de ces zones, et simultanément les rouleaux 20, 20' vont parcourir le jeu de parcours inférieur (de distance J) des rainures de guidage, entrainant la libération de l'écran 2 avec une descente de l'écran d'au moins la hauteur H (et de la distance J du jeu de parcours de rainures) dans l'espace de sécurité E, voire plus bas.

En cas de choc, l'écran 2 est ainsi mis hors de portée dangereuse pour la tête d'un piéton qui serait heurté. Le couvre-écran a protégé dans un premier temps la tête du piéton.

L'agencement permet en outre d'installer des écrans numériques rapprochés du pare-brise, par rapport à l'art antérieur, tout en respectant des conditions de sécurité notamment en cas de « choc tête piéton ».

En outre, cet agencement, notamment par l'utilisation de rouleaux de guidage, solidarisés sensiblement suivant le sens Z (vertical) au milieu du dos de l'écran, s'insérant dans des rainures de guidage correspondantes dans la paroi structurelle, permet un montage facile de l'écran. Les pattes de fixation selon la configuration décrite sont orientées vers la face d'affichage 200 et donc facilement accessibles pour être fixées à la paroi structurelle. Un opérateur peut ainsi monter l'écran 2 en prenant l'écran 2 muni des rouleaux de guidage 20, 20' et des pattes de fixation 21, 21', en insérant les rouleaux 20, 20' du haut vers le bas dans les rainures de guidage respectives (flèche M sur Fig. 2), les pattes de fixation 21, 21' venant en butée respectivement sur les parties horizontales de la paroi structurelle tout en se positionnant dans les zones de fixation frangibles 3, 3' respectives. Les rouleaux de guidage et les rainures de guidage permettent aussi de maintenir la partie haute de l'écran à la paroi structurelle, ce qui assure un meilleur maintien de l'écran, outre celui par les pattes de fixation.

L'invention a été décrite pour un écran équipé de deux rouleaux de guidage, toutefois ce nombre n'est pas limitatif. Le nombre d'éléments de guidage (rouleaux, rainures de guidage associées aux rouleaux) dépend de la taille de l'écran.

Par ailleurs, plusieurs écrans numériques peuvent être installés selon le même agencement sur la paroi structurelle selon des mêmes agencements que celui qui vient d'être décrit.

## Revendications

1. Agencement d'une planche de bord d'un véhicule automobile et d'un écran numérique (2) comportant une face d'affichage (200) et un dos (201) opposés, un bord supérieur (202) et un bord inférieur (203) opposés, ledit agencement comprenant :
- au moins un premier élément de guidage (20, 20') de l'écran solidarisé au dos de l'écran,
- au moins une patte de fixation (21),
**caractérisé en ce que**
la au moins une patte de fixation comporte une partie supérieure (210) sensiblement verticale, ayant une hauteur (H) prédéterminée, solidarisée au bord inférieur (203) de l'écran, et une partie inférieure de fixation (211) réceptrice d'un élément de fixation (22), et **en ce que** l'agencement comprend en outre
- une paroi structurelle (1) de la planche de bord supportant l'écran (2) et comportant au moins un deuxième élément de guidage (10) dudit premier élément de guidage(20) et au moins une zone frangible (3, 3') réceptrice de la partie inférieure de fixation (211) de ladite patte de fixation de l'écran,
ledit deuxième élément de guidage (10) s'étendant sensiblement incliné par rapport à la verticale et à proximité du dos de l'écran, ayant une partie de parcours inférieure disponible sur une distance prédéterminée (J),
et ledit deuxième élément de guidage (10) étant prolongé inférieurement par une partie de paroi structurelle sensiblement verticale (103) prolongée inférieurement par une partie de paroi structurelle horizontale (104) espacée du bord inférieur (203) de l'écran suivant au moins la partie supérieure sensiblement verticale (210) de la patte de fixation , un espace de sécurité ( E) étant défini entre lesdites parties de paroi verticale (103) et horizontale (104) et à l'arrière de la partie de patte de fixation supérieure (210), pour y recevoir au moins la partie inférieure de l'écran quand l'au moins une zone frangible (3, 3') est rompue lors d'un choc touchant l'écran, ledit écran étant guidé en descente au moins vers ledit espace sécurisé ( E) par lesdits premier (20) et deuxième (10) moyens de guidage suivant la partie de parcours inférieure disponible du deuxième moyen de guidage (10).

2. Agencement selon la revendication 1, **caractérisé en ce que** la partie de parcours inférieure disponible sur une distance prédéterminée (J) du deuxième élément de guidage est telle que cette distance prédéterminée (J) est sensiblement égale à la hauteur (H) de la partie supérieure sensiblement verticale (210) de la patte de fixation.

3. Agencement selon l'une des revendications 1 à 2, **caractérisé en ce que** ledit au moins premier élément de guidage (20, 20') de l'écran, solidarisé au dos de l'écran, est un rouleau de guidage, et ledit au moins un deuxième élément de guidage (10) dudit premier élément de guidage est une rainure de guidage réceptrice du rouleau.

4. Agencement selon la revendication 1, **caractérisé en ce que** la partie de paroi structurelle horizontale (104) espacée du bord inférieur (203) de l'écran comprend une partie saillante (1040) orientée vers l'arrière qui est incluse dans l'au moins une zone frangible (3), et ladite patte de fixation (21) comprend une partie sensiblement horizontale (212), entre les parties inférieure et supérieure de ladite patte, en appui sur ladite partie saillante (1040).

5. Agencement selon l'une des revendications 1 à 4, **caractérisé en ce que** l'au moins une zone frangible (3, 3') comprend des portions de paroi structurelle affaiblies (30), d'épaisseur amincie et/ou dépourvues de matière, entourant une partie de paroi structurelle réceptrice de la partie inférieure de fixation (211) de la patte de fixation.

6. Agencement selon la revendication 5, **caractérisé en ce que** la partie de paroi structurelle (105) réceptrice de la partie inférieure de fixation (211) de la patte de fixation entourée par lesdites portions de paroi affaiblies (30) est en saillie orientée vers l'arrière.

7. Agencement selon l'une des revendications 1 à 6, **caractérisé en ce qu'**il comprend un couvre-écran (4) s'étendant au-dessus d'au moins une partie de la paroi structurelle à l'avant de l'écran, et venant en débord de la face d'affichage (200) de l'écran, et de préférence ledit couvre-écran (4) étant maintenu à force à la paroi structurelle.

8. Agencement selon l'une des revendications 1 à 7, **caractérisé en ce que** lesdits premier (20) et deuxième (10) éléments de guidage maintiennent le corps de l'écran à la paroi structurelle.

9. Véhicule automobile comportant une planche de bord supportant au moins un écran numérique (2), **caractérisé en ce qu'**il comprend au moins un agencement de la planche de bord et de l'écran numérique selon l'une quelconque des revendications 1 à 8.

## Patentansprüche

1. Anordnung eines Armaturenbretts eines Kraftfahrzeugs und eines digitalen Bildschirms (2), der eine Anzeigefläche (200) und eine Rückseite (201), die einander gegenüberliegen, sowie einen oberen Rand (202) und einen unteren Rand (203), die einander gegenüberliegen, aufweist, wobei die Anordnung umfasst:
- mindestens ein erstes Führungselement (20, 20') des Bildschirms, das mit der Rückseite des Bildschirms fest verbunden ist,
- mindestens eine Befestigungslasche (21), **dadurch gekennzeichnet, dass** die mindestens eine Befestigungslasche einen im Wesentlichen vertikalen oberen Teil (210), der eine vorbestimmte Höhe (H) aufweist und mit dem unteren Rand (203) des Bildschirms fest verbunden ist, und einen unteren Befestigungsteil (211), der ein Befestigungselement (22) aufnimmt, aufweist, und dadurch, dass die Anordnung außerdem umfasst:
- eine Strukturwand (1) des Armaturenbretts, die den Bildschirm (2) stützt und mindestens ein zweites Führungselement (10) des ersten Führungselements (20) und mindestens einen zerbrechbaren Bereich (3, 3'), der den unteren Befestigungsteil (211) der Befestigungslasche des Bildschirms aufnimmt, aufweist,
wobei sich das zweite Führungselement (10) im Wesentlichen geneigt bezüglich der Vertikalen und in der Nähe der Rückseite des Bildschirms erstreckt und einen unteren Laufstreckenteil aufweist, der auf einer vorbestimmten Distanz (J) verfügbar ist,
und wobei das zweite Führungselement (10) unten durch einen im Wesentlichen vertikalen Strukturwandteil (103) verlängert ist, der unten durch einen horizontalen Strukturwandteil (104) verlängert ist, der vom unteren Rand (203) des Bildschirms mindestens entsprechend dem im Wesentlichen vertikalen oberen Teil (210) der Befestigungslasche beabstandet ist, wobei ein Sicherheitsraum (E) zwischen dem vertikalen (103) und dem horizontalen (104) Wandteil und hinter dem oberen Teil (210) der Befestigungslasche definiert ist, um hier mindestens den unteren Teil des Bildschirms aufzunehmen, wenn der mindestens eine zerbrechbare Bereich (3, 3') bei einem auf den Bildschirm einwirkenden Stoß zerbrochen wird, wobei der Bildschirm bei der Abwärtsbewegung mindestens zu dem gesicherten Raum (E) hin durch das erste (20) und das zweite (10) Führungsmittel entlang des verfügbaren unteren Laufstreckenteils des zweiten Führungsmittels (10) geführt wird.

2. Anordnung nach Anspruch 1, **dadurch gekennzeichnet, dass** der auf einer vorbestimmten Distanz (J) verfügbare untere Laufstreckenteil des zweiten Führungselements so beschaffen ist, dass diese vorbestimmte Distanz (J) im Wesentlichen gleich der Höhe (H) des im Wesentlichen vertikalen oberen Teils (210) der Befestigungslasche ist.

3. Anordnung nach einem der Ansprüche 1 bis 2, **dadurch gekennzeichnet, dass** das mindestens eine erste Führungselement (20, 20') des Bildschirms, das mit der Rückseite des Bildschirms fest verbunden ist, eine Führungsrolle ist und das mindestens eine zweite Führungselement (10) des ersten Führungselements eine Führungsnut ist, welche die Rolle aufnimmt.

4. Anordnung nach Anspruch 1, **dadurch gekennzeichnet, dass** der horizontale Strukturwandteil (104), der vom unteren Rand (203) des Bildschirms beabstandet ist, einen nach hinten gerichteten vorstehenden Teil (1040) umfasst, der in dem mindestens einen zerbrechbaren Bereich (3) enthalten ist, und die Befestigungslasche (21) einen im Wesentlichen horizontalen Teil (212) zwischen dem unteren und dem oberen Teil der Lasche umfasst, der an dem vorstehenden Teil (1040) anliegt.

5. Anordnung nach einem der Ansprüche 1 bis 4, **dadurch gekennzeichnet, dass** der mindestens eine zerbrechbare Bereich (3, 3') geschwächte Strukturwandabschnitte (30) umfasst, die von geringerer Dicke und/oder nicht mit Material versehen sind und einen Strukturwandteil umgeben, der den unteren Befestigungsteil (211) der Befestigungslasche aufnimmt.

6. Anordnung nach Anspruch 5, **dadurch gekennzeichnet, dass** der den unteren Befestigungsteil (211) der Befestigungslasche aufnehmende Strukturwandteil (105), der von den geschwächten Wandabschnitten (30) umgeben ist, nach hinten vorstehend ausgerichtet ist.

7. Anordnung nach einem der Ansprüche 1 bis 6, **dadurch gekennzeichnet, dass** sie eine Bildschirmabdeckung (4) umfasst, die sich oberhalb wenigstens eines Teils der Strukturwand zur Vorderseite des Bildschirms hin erstreckt und über die Anzeigefläche (200) des Bildschirms hinausragt, und wobei die Bildschirmabdeckung (4) vorzugsweise fest an der Strukturwand gehalten wird.

8. Anordnung nach einem der Ansprüche 1 bis 7, **dadurch gekennzeichnet, dass** das erste (20) und das zweite (10) Führungselement den Körper des Bildschirms an der Strukturwand halten.

9. Kraftfahrzeug, welches ein Armaturenbrett aufweist, das mindestens einen digitalen Bildschirm (2) stützt, **dadurch gekennzeichnet, dass** es eine Anordnung des Armaturenbretts und des digitalen Bildschirms nach einem der Ansprüche 1 bis 8 umfasst.

## Claims

1. Arrangement of a dashboard of a motor vehicle and of a digital screen (2) having a display face (200) and a back (201) on opposite sides, and an upper edge (202) and a lower edge (203) on opposite sides, said arrangement comprising:
- at least one first guide element (20, 20') for the screen, said first guide element being secured to the back of the screen,
- at least one fastening bracket (21), **characterized in that** the at least one fastening bracket has a substantially vertical upper part (210), having a predetermined height (H), secured to the lower edge (203) of the screen, and a lower fastening part (211) receiving a fastening element (22), and **in that** the arrangement further comprises
- a structural wall (1) of the dashboard supporting the screen (2) and having at least one second guide element (10) for said first guide element (20) and at least one frangible region (3, 3') receiving the lower fastening part (211) of said fastening bracket of the screen,
said second guide element (10) extending so as to be substantially inclined with respect to the vertical and in the vicinity of the back of the screen, having a lower path part available over a predetermined distance (J),
and said second guide element (10) being extended downwardly by a substantially vertical structural wall part (103) extended downwardly by a horizontal structural wall part (104) spaced apart from the lower edge (203) of the screen along at least the substantially vertical upper part (210) of the fastening bracket, a safety space (E) being defined between said vertical (103) and horizontal (104) wall parts and to the rear of the upper fastening bracket part (210) for receiving at least the lower part of the screen therein when the at least one frangible region (3, 3') is broken in the event of an impact to the screen, said screen being guided downwards at least towards said safety space (E) by said first (20) and second (10) guide means along the available lower path part of the second guide means (10).

2. Arrangement according to Claim 1, **characterized in that** the lower path part available over a predetermined distance (J) of the second guide element is such that this predetermined distance (J) is substantially equal to the height (H) of the substantially vertical upper part (210) of the fastening bracket.

3. Arrangement according to either of Claims 1 and 2, **characterized in that** said at least first guide element (20, 20') for the screen, which is secured to the back of the screen, is a guide roller, and said at least one second guide element (10) for said first guide element is a guide groove receiving the roller.

4. Arrangement according to Claim 1, **characterized in that** the horizontal structural wall part (104) spaced apart from the lower edge (203) of the screen comprises a rearwardly projecting part (1040) that is included in the at least one frangible region (3), and said fastening bracket (21) comprises a substantially horizontal part (212), between the lower and upper parts of said bracket, bearing against said projecting part (1040).

5. Arrangement according to one of Claims 1 to 4, **characterized in that** the at least one frangible region (3, 3') comprises weakened structural wall portions (30), which have a reduced thickness and/or are devoid of material, surrounding a structural wall part receiving the lower fastening part (211) of the fastening bracket.

6. Arrangement according to Claim 5, **characterized in that** the structural wall part (105) receiving the lower fastening part (211) of the fastening bracket surrounded by said weakened wall portions (30) projects rearwardly.

7. Arrangement according to one of Claims 1 to 6, **characterized in that** it comprises a screen cover (4) extending above at least part of the structural wall in front of the screen and projecting beyond the display face (200) of the screen, said screen cover (4) preferably being forcibly held on the structural wall.

8. Arrangement according to one of Claims 1 to 7, **characterized in that** said first (20) and second (10) guide elements hold the body of the screen on the structural wall.

9. Motor vehicle having a dashboard supporting at least one digital screen (2), **characterized in that** it comprises at least one arrangement of the dashboard and of the digital screen according to any one of Claims 1 to 8.
